# DEMANDE DE BREVET EUROPEEN

(11) **EP 0 741 278 A1**
(43) Date de publication de la demande: **06.11.1996**
(21) Numéro de dépôt: 96400930.2
(22) Date de dépôt: 30.04.1996
(51) Int. Cl.: G01C 22/00, A61B 5/00

(54) **Procédé et dispositif de mesure de la distance parcourue par un marcheur**

(30) Priorité: 02.05.1995 FR 9505232
(71) Demandeur: LIPHA, LYONNAISE INDUSTRIELLE PHARMACEUTIQUE, F-69379 Lyon Cedex 08 (FR)
(72) Inventeur: Barth, Philippe, 69006 Lyon (FR); Perrot, Georges, 69003 Lyon (FR); Gamand, Solange, 69003 Lyon (FR)
(74) Mandataire: Obolensky, Michel

(57) **Abrégé**

L'invention concerne un appareil portable de mesure de la distance parcourue par un marcheur, notamment un marcheur dont on veut éprouver l'endurance.

L'appareil comporte des moyens (18, 20, 32 à 48) de mesure de la distance parcourue par le marcheur. Il comporte en outre des moyens (62, 64, 66) actionnables par le marcheur d'entrée d'une information relative au déroulement de la marche et des moyens (47) de stockage d'une part de la valeur de la distance intermédiaire parcourue correspondant à la distance parcourue par le marcheur entre le début de la marche et l'instant d'actionnement des moyens d'entrée, et d'autre part de la distance totale parcourue par le marcheur.

## Description

La présente invention concerne un procédé de mesure de la distance parcourue par un marcheur. Elle concerne également un appareil portable de mesure de la distance parcourue par un marcheur.

Dans le cadre du diagnostic ou du suivi médical de certaines pathologies, il est utile de mesurer avec une bonne précision la distance parcourue en marchant par un patient avant que celui-ci n'éprouve des premières douleurs, ou encore qu'il ne soit conduit à s'arrêter à cause de douleurs insupportables ou d'une fatigue excessive.

Par ailleurs, il est intéressant de pouvoir contrôler les conditions dans lesquelles le patient a effectué cette épreuve, en particulier la vitesse moyenne à laquelle il a marché ainsi que les éventuelles accélérations ou ralentissements qu'il a pu être contraint d'effectuer.

En particulier, lors de la réalisation de telles mesures, on recherche la distance réellement parcourue par le patient et non uniquement une approximation de celle-ci à partir de la distance estimée sur le sol en fonction du trajet qu'il a suivi. De plus, une telle approximation ne peut pas être effectuée facilement dans des conditions réelles de la vie quotidienne ou sur des terrains non spécifiquement adaptés.

L'invention a pour but de fournir un procédé et un dispositif permettant de satisfaire les exigences précitées et en particulier de mesurer la distance réellement parcourue par un marcheur.

A cet effet, l'invention a pour objet un procédé de mesure de la distance parcourue par un marcheur, caractérisé en ce qu'il comporte les étapes suivantes :
i - on mesure la distance élémentaire séparant les pieds du marcheur lors de chaque pas, et
ii - on calcule la somme des valeurs mesurées de distances élémentaires correspondant chacune à un pas pour déterminer la distance totale parcourue.

Suivant des modes particuliers de mise en oeuvre du procédé, celui-ci peut comporter l'une ou plusieurs des caractéristiques suivantes :
- pour la mesure de la distance élémentaire séparant les pieds du marcheur lors de chaque pas, le procédé comporte les étapes suivantes :
   a - on effectue à une fréquence prédéterminée une série de mesures de la distance séparant les pieds du marcheur lors de la marche,
   b - on détecte parmi ces mesures les valeurs correspondant à des maximums locaux, et
   c - on adopte pour les valeurs de distance élémentaire séparant les pieds pour chaque pas les valeurs des maximums locaux détectés ;
- pour mesurer une distance séparant les pieds du marcheur, on mesure le temps de propagation d'une onde d'un membre inférieur du marcheur à son autre membre inférieur, et on en déduit par calcul la valeur de la distance séparant les deux pieds ;
- l'onde est une onde ultrasonore ;
- le calcul de la valeur de la distance séparant les deux pieds est corrigée en tenant compte de la température ambiante ;
- l'on mesure la durée séparant deux mesures de distances élémentaires au cours de la marche, l'on calcule une estimation de la vitesse instantanée du marcheur pour chaque mesure de distance élémentaire, et l'on détecte si la vitesse instantanée s'écarte d'une plage de valeurs prédéterminées ;
- l'on mesure la durée totale du parcours et l'on calcule la valeur de la vitesse moyenne du marcheur ;
- l'on calcule des valeurs de distance parcourue intermédiaires correspondant à la distance parcourue par le marcheur entre le début de la marche et un instant donné, indiqué par le marcheur.

L'invention a également pour objet un appareil portable de mesure de la distance parcourue par un marcheur, notamment un marcheur dont on veut éprouver l'endurance, comportant des moyens de mesure de la distance parcourue par le marcheur, caractérisé en ce qu'il comporte des moyens actionnables par le marcheur d'entrée d'une information relative au déroulement de la marche et des moyens de stockage d'une part de la valeur de la distance intermédiaire parcourue correspondant à la distance parcourue par le marcheur entre le début de la marche et l'instant d'actionnement des moyens d'entrée, et d'autre part de la distance totale parcourue par le marcheur.

Suivant des modes particuliers de réalisation, l'appareil peut présenter l'une ou plusieurs des caractéristiques suivantes :
- les moyens de mesure de la distance parcourue comportent des moyens de mesure de la distance élémentaire séparant les pieds du marcheur lors de chaque pas et des moyens de calcul de la somme des valeurs mesurées des distances élémentaires correspondant chacune à un pas pour déterminer la distance totale parcourue ;
- il comporte des moyens de stockage des distances élémentaires séparant les pieds du marcheur lors de chaque pas ;
- les moyens de mesure comportent un émetteur et un récepteur disposés sur les faces en regard des membres inférieurs du marcheur reliés par des conducteurs à un boîtier électronique de traitement ;
- l'émetteur et le récepteur comportent des moyens à boucles et crochets de fixation sur les faces en regard des chevilles du marcheur et le boîtier électronique de traitement comporte des moyens d'accrochage à la ceinture du marcheur ;
- il comporte des moyens de cadencement des mesures, une horloge de mesure de la durée de propagation de l'onde entre l'émetteur et le récepteur et des moyens de calcul de la distance élémentaire séparant les deux pieds du marcheur en fonction de la durée de propagation de l'onde ultrasonore ;
- il comporte des moyens de mesure de la durée écoulée depuis le début de la marche ;
- les moyens de stockage comportent un support de stockage de données, adapté pour être lu dans un dispositif de lecture et de traitement séparé ;
- le support de stockage de données est amovible;
- l'information relative au déroulement de la marche de celui-ci est l'apparition d'un événement particulier au cours de la marche ;
- il comporte des moyens de stockage de l'instant d'actionnement des moyens d'entrée ; et
- il comporte des moyens d'affichage de la distance parcourue.

L'invention sera mieux comprise à la lecture de la description qui va suivre, donnée uniquement à titre d'exemple et faite en se référant aux dessins sur lesquels :
- la figure 1 est une vue d'ensemble de l'appareil portable de mesure ;
- la figure 2 est une vue partielle coupée au-dessous du genou de la face intérieure d'une jambe d'un marcheur, équipé de l'appareil portable de mesure de la figure 1 ;
- la figure 3 est une vue schématique de dessus montrant l'implantation sur un marcheur de l'émetteur et du récepteur de l'appareil portable, ainsi que leur interaction lors d'une phase de mesure ;
- la figure 4 est un schéma synoptique de l'appareil portable de mesure ; et
- les figures 5A à 5C sont des parties complémentaires d'un même organigramme explicitant le fonctionnement de l'appareil portable schématisé sur la figure 4, et mettant en oeuvre le procédé selon l'invention.

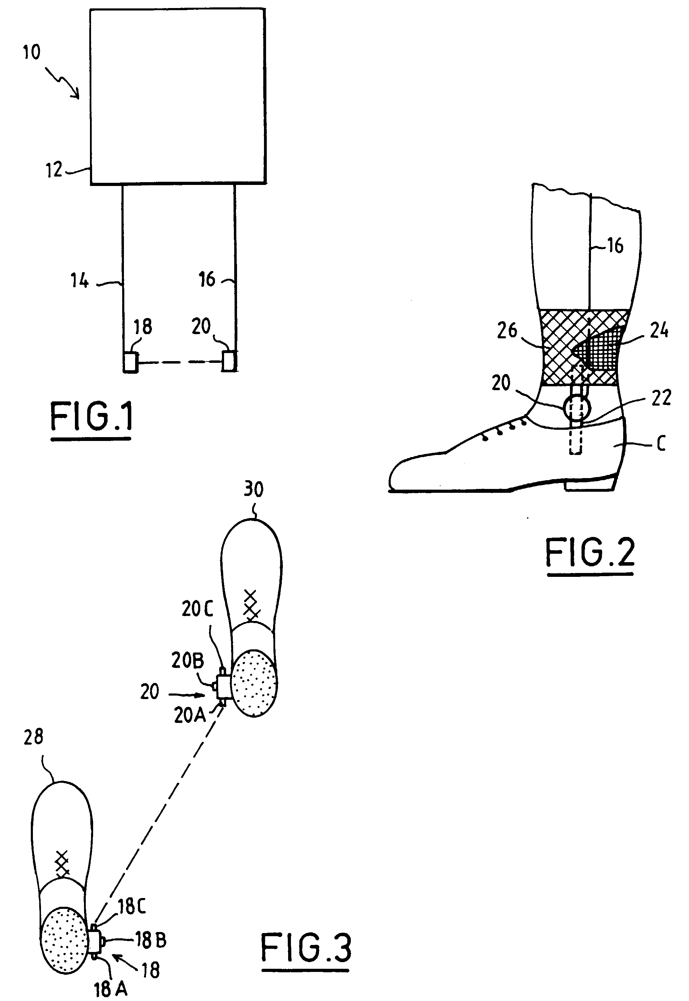

Sur la figure 1, on a représenté schématiquement un appareil 10 portable de mesure de la distance parcourue par un marcheur et de suivi de l'endurance de celui-ci. Il comporte principalement un boîtier électronique 12 de traitement et de stockage des données relié par deux conducteurs 14, 16 à, respectivement, un émetteur 18 d'ondes ultrasonores et un récepteur 20 d'ondes ultrasonores.

Le boîtier 12 comporte des moyens (non représentés) d'accrochage à la ceinture du patient, alors que l'émetteur 18 et le récepteur 20 sont munis sur leur face arrière d'une bande à crochets d'un ensemble de bandes à boucles et crochets afin d'être fixés en vis-à-vis sur les faces en regard des membres inférieurs du marcheur.

L'émetteur 18 et le récepteur 20 sont disposés de manière similaire, et suivant l'agencement représenté sur la figure 2. Cette figure correspond à l'agencement du récepteur 20.

Pour procéder à la fixation du récepteur 20, on dispose verticalement sur la face intérieure de la cheville du marcheur une bande 22 à boucles d'un ensemble de bandes à boucles et crochets. Une extrémité inférieure de cette bande pénètre à l'intérieur de la chaussure C du marcheur alors que l'extrémité supérieure de celle-ci est maintenue par un premier bandeau élastique 24 disposé juste au-dessus de la cheville.

Le récepteur 20 est ensuite appliqué sur la bande 22 à bouches immédiatement en-dessous de la malléole. Il y est maintenu accroché par coopération de la bande 22 avec la bande à crochets portée par la face arrière de celui-ci.

Le conducteur de liaison 16 est disposé le long de la jambe du marcheur et remonte jusqu'au boîtier 12 disposé au niveau de la ceinture de celui-ci. Un second bandeau élastique 26 est engagé sur le membre inférieur du patient afin qu'il recouvre le premier bandeau élastique 24 et maintienne enserré entre eux le conducteur de liaison 16.

Sur la figure 3, on a représenté en vue de dessus l'agencement sur un marcheur de l'émetteur 18 et du récepteur 20 dans une configuration de fonctionnement.

Sur cette figure, l'émetteur 18 est associé au pied gauche 28 du marcheur alors que le récepteur 20 est associé à son pied droit 30.

L'émetteur 18 et le récepteur 20 comportent chacun trois transducteurs ultrasonores notés respectivement 18A, 18B, 18C et 20A, 20B, 20C dont les directions d'émission ou de réception sont décalées les unes par rapport aux autres de 90° dans un plan horizontal. Ainsi, la transmission d'une onde entre l'émetteur 18 et le récepteur 20 est possible quel que soit l'écartement des pieds du marcheur. Un tel agencement est schématisé en trait interrompu sur la figure 3.

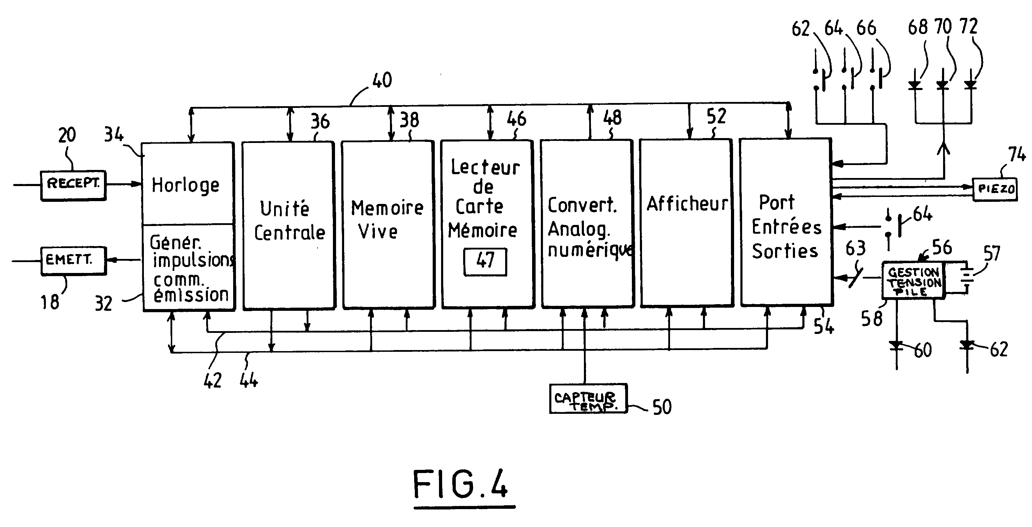

Sur la figure 4 est représenté le schéma synoptique de l'appareil de mesure. On retrouve sur celui-ci l'émetteur 18 et le récepteur 20.

L'émetteur 18 est relié à un générateur 32 d'impulsions de commande d'émission adapté pour engendrer à une fréquence prédéterminée des impulsions d'excitation de l'émetteur 18 afin que celui-ci émette une onde ultrasonore. Le générateur 32 constitue ainsi un moyen de cadencement de l'émission des ondes ultrasonores. La fréquence de cadencement désirée est comprise entre 50 et 200 Hz et est réglée par pas de 10 Hz dans cette plage de valeurs. Le générateur d'impulsions 32 est en outre relié à une horloge 34 afin de transmettre à celle-ci des signaux de mise en route synchronisés avec les impulsions d'excitation envoyés vers l'émetteur. Le récepteur 20 est relié à l'horloge 34 afin de transmettre à celle-ci, lors de la réception d'une onde ultrasonore, un signal d'arrêt. L'horloge 34 est ainsi adaptée pour mesurer la durée de transmission de l'onde ultrasonore de l'émetteur 18 au récepteur 20.

Le générateur d'impulsions 32 et l'horloge 34 sont reliés à des organes de traitement et de stockage des mesures comportant notamment une unité centrale de traitement 36 formée par un microprocesseur et associée à une mémoire vive 38. Ces derniers sont reliés par un bus 40 de données codées sur 16 bits, un bus 42 de commandes codées sur 2 bits et un bus 44 d'adresses codées sur 32 bits. Par ailleurs, un dispositif 46 de stockage sur une carte à mémoire 47 amovible est relié à ces différents bus. Ce dispositif comporte par exemple un lecteur de carte PCMCIA de type EMCD-P commercialisé par la société SCM Microsystems GmbH et distribué en France par la société Industrial Computer Source Europe, auquel est associée une carte spécifique de mémorisation comportant une batterie d'alimentation propre.

Des organes de communication sont reliés sur ces différents bus et en particulier un convertisseur analogique numérique 48 auquel est raccordé un capteur de température ambiante 50, un afficheur 52 ainsi qu'un port d'entrées-sorties 54.

Par ailleurs, il est prévu une source d'alimentation 56, comportant notamment un ensemble de piles 57. Ce dernier est associé à un module de gestion de la tension des piles 58 de type classique adapté pour commander l'une ou l'autre de deux diodes 60, 62 en fonction du niveau de charge des piles. Un interrupteur 63 est interposé entre la source d'alimentation 56 et les différents organes à alimenter.

Une entrée du port d'entrées-sorties 54 est reliée à un bouton-poussoir de réinitialisation 64. Trois autres entrées de ce port sont reliées à des boutons-poussoirs 62, 64, 66 correspondant respectivement à l'indication du début de la marche, la perception d'une première douleur et enfin l'arrêt de la marche.

Chaque bouton-poussoir 62, 64, 66 est associé à une diode électroluminescente de couleur différente notée respectivement 68, 70, 72 reliée au port d'entrées-sorties et adaptée pour être activée lorsque le bouton-poussoir correspondant a été actionné.

Un organe piézoélectrique 74 adapté pour émettre un signal sonore est par ailleurs relié au port d'entrées-sorties 54.

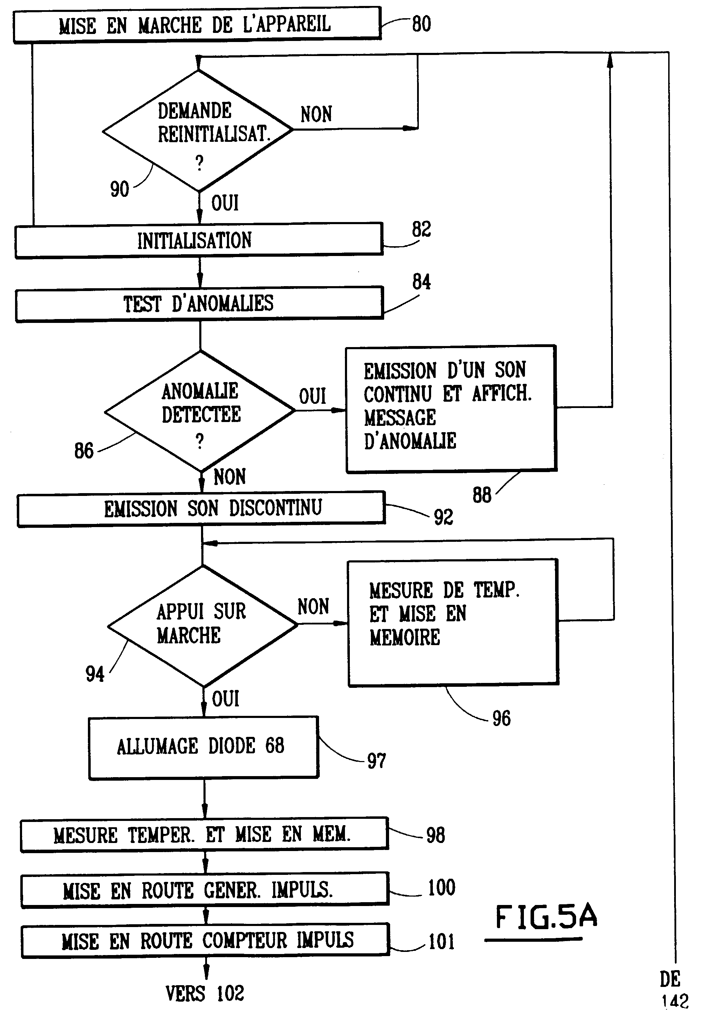

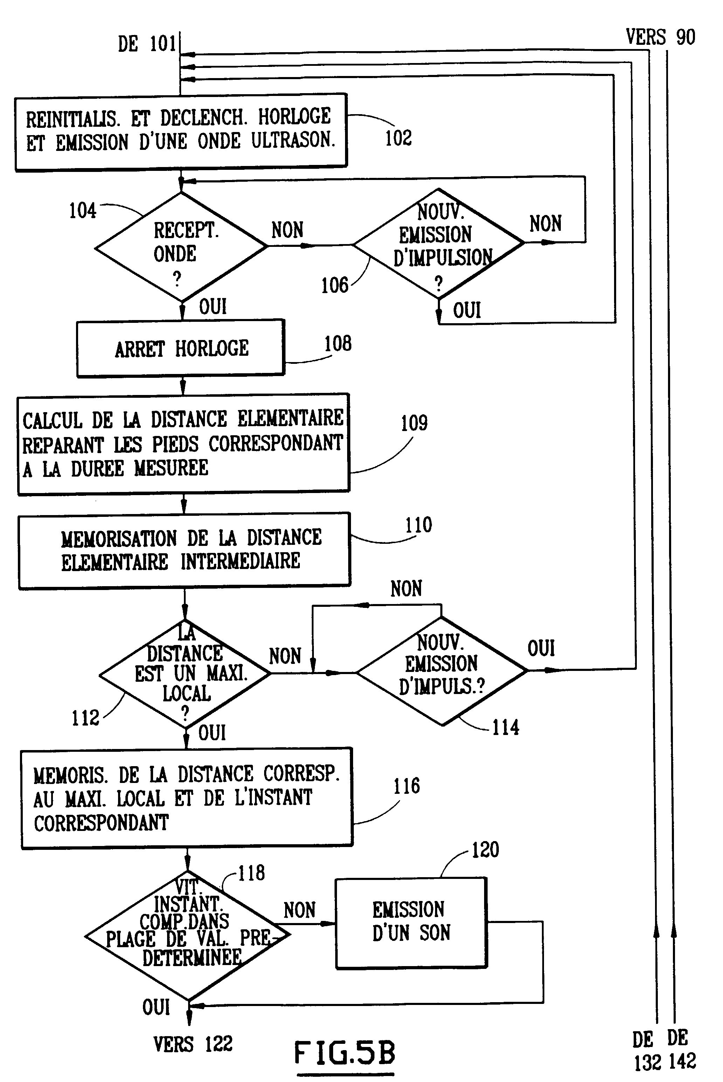

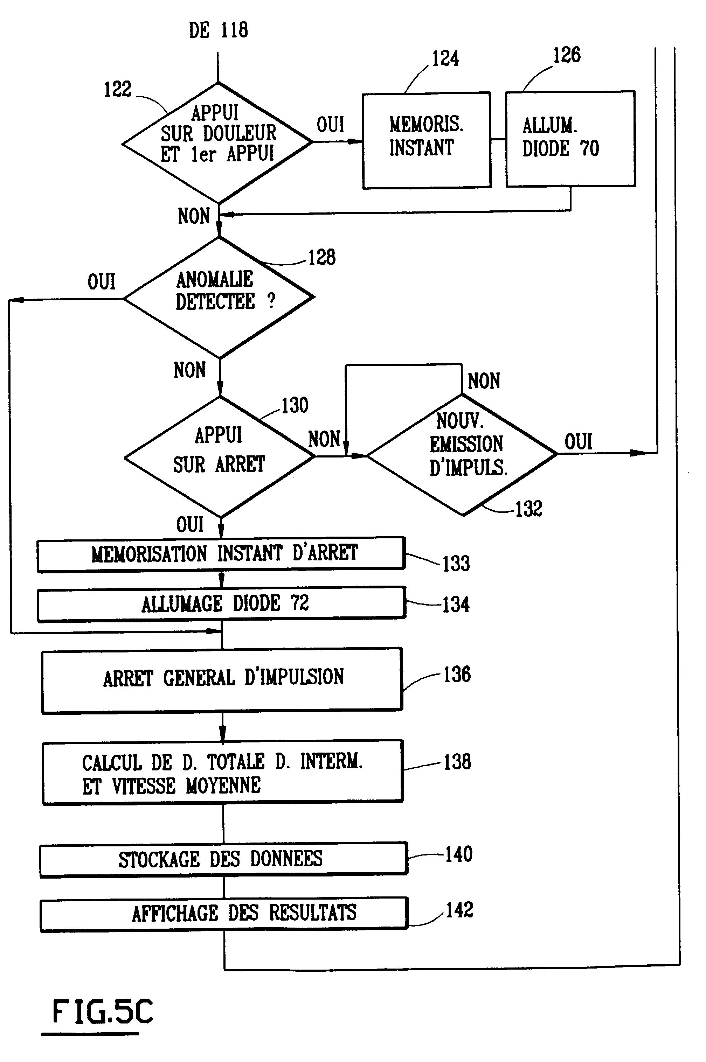

Le dispositif électronique tel qu'il vient d'être décrit est programmé afin de mettre en oeuvre l'algorithme correspondant à l'organigramme représenté sur les figures 5A à 5C. Le programme est stocké dans une mémoire morte (non représentée).

Lors de la mise en marche de l'appareil à l'étape 80 (Fig. 5A), par fermeture de l'interrupteur 63, le dispositif procède automatiquement à l'étape 82 à l'initialisation des paramètres de l'appareil, notamment à la remise à zéro des compteurs, et en particulier de ceux de l'horloge 34. Un test d'anomalies est ensuite mené à l'étape 84 afin de vérifier la charge des piles 57 de la source d'alimentation, la connexion correcte de l'émetteur 18 et du récepteur 20, la présence d'espace mémoire disponible dans la mémoire vive 38, la présence d'une carte mémoire dans le lecteur 46, l'absence de protection en écriture de celle-ci et la charge suffisante des batteries de celle-ci.

Si une anomalie est détectée à l'étape 86, un son continu est émis à l'étape 88 par l'élément piézoélectrique 74. Par ailleurs, un affichage d'anomalies indiquant l'origine de l'anomalie détectée apparaît sur l'afficheur 52.

Après une période de temps prédéterminée, l'émission du son continu cesse, et le dispositif se met en veille attendant une action corrective de l'anomalie détectée et une demande de réinitialisation à l'étape 90 de l'ensemble du dispositif par actionnement du bouton-poussoir 64. Après une telle réinitialisation à l'étape 82, un nouveau test d'anomalies est conduit à l'étape 84.

Si aucune anomalie n'est détectée à l'étape 86, l'élément piézoélectrique 74 émet à l'étape 92 un son discontinu caractéristique.

Le dispositif effectue ensuite un test à l'étape 94 pour savoir si le marcheur actionne le bouton-poussoir 62 indiquant le début de la marche.

Si le bouton-poussoir 62 n'est pas actionné, une mesure de température est effectuée à l'étape 96 à partir du capteur de température 50. La valeur de température ainsi relevée est stockée dans la mémoire 38. Le test de l'étape 94 est alors à nouveau pratiqué.

Lorsque la réponse à ce test est positive, la diode 68 correspondant au début de la marche est allumée à l'étape 97 puis une nouvelle mesure de température est effectuée à l'étape 98. Cette valeur de température est stockée en mémoire en remplacement de la valeur de température précédente.

Le générateur 32 d'impulsions de commande d'émission est alors mis en route à l'étape 100. Un compteur d'impulsions (non représenté) est alors activé à l'étape 101 pour calculer le nombre d'impulsions engendrées et ainsi permettre de déterminer le temps écoulé depuis le début de la marche à partir de la fréquence de génération des impulsions.

La réception par l'horloge 34 de la première impulsion issue du générateur 32 provoque la réinitialisation et le déclenchement de celle-ci à l'étape 102 (Fig. 5B). Par ailleurs, à cette même étape, l'émetteur 18 émet une onde ultrasonore.

Un test de réception de cette onde par le récepteur 20 est effectué à l'étape 104. Si l'onde n'est pas reçue, il est vérifié à l'étape 106 si une nouvelle impulsion a été émise depuis le générateur 32. Si tel n'est pas le cas, on procède à nouveau au test de réception de l'onde à l'étape 104. Si aucune onde n'est reçue par le récepteur 20 et une nouvelle impulsion est engendrée par le générateur 32, le programme retourne à l'étape 102 où l'horloge 34 est réinitialisée et déclenchée à nouveau. Une nouvelle onde ultrasonore est alors émise par l'émetteur 18.

Si, à l'étape 104, l'onde ultrasonore émise à l'étape 102 par l'émetteur 18 est reçue par le récepteur 20, l'horloge 34 est arrêtée à l'étape 108. A partir de la durée mesurée par l'horloge, correspondant au temps de propagation de l'onde de l'émetteur 18 jusqu'au récepteur 20, et de la célérité des ultrasons dans l'air, l'unité centrale 36 calcule à l'étape 109 la distance élémentaire intermédiaire séparant les pieds du marcheur. Afin d'augmenter la précision du calcul, la température ambiante mesurée par le capteur de température 50 à l'instant donné est prise en compte pour le calcul. Ainsi, la durée de propagation de l'onde étant désignée par t et exprimée en seconde et la température ambiante étant désignée par T et exprimée en degrés Kelvin, la distance élémentaire intermédiaire séparant les deux pieds du marcheur, c'est-à-dire la distance séparant à cet instant l'émetteur 18 du récepteur 20 étant désignée par d et exprimée en mètre, est donnée par la relation d = t x 330 x √T/273.

Afin de réactualiser périodiquement la valeur de température utilisée pour le calcul de la distance intermédiaire parcourue, l'appareil effectue des mesures périodiques de la température à partir du capteur de température 50 à une fréquence correspondant par exemple à dix fois la fréquence du générateur d'impulsions 32.

Les distances élémentaires intermédiaires calculées sont mémorisées à l'étape 110 dans une table intermédiaire de la mémoire 38.

Parmi les valeurs mémorisées précédemment dans cette table, un test est réalisé à l'étape 112 pour rechercher un maximum local.

Si aucun maximum local n'est détecté en dehors de la dernière distance mémorisée, un test est effectué à l'étape 114 pour repérer l'émission d'une nouvelle impulsion de commande d'émission engendrée par le générateur 32. Lorsqu'une telle émission est détectée, une réinitialisation de l'horloge 34 et un nouveau déclenchement de celle-ci sont réalisés à l'étape 102. Ce déclenchement s'accompagne de l'émission d'une nouvelle onde ultrasonore depuis l'émetteur 18.

Si par contre un maximum local est détecté à l'étape 112, la valeur de distance élémentaire intermédiaire correspondant à ce maximum local est stockée dans une table de distances élémentaires à l'étape 116. La valeur de ce maximum local correspond à la distance séparant les pieds du marcheur lorsque ceux-ci sont écartés du maximum, c'est-à-dire lors de l'achèvement d'un pas. Ainsi, la valeur du maximum local est représentative de la distance élémentaire parcourue lors d'un pas.

L'instant correspondant à la détection de ce maximum local, exprimé sous la forme d'un nombre d'impulsions engendrées par le générateur 32 depuis le début de la marche, est également stocké dans cette table de distances élémentaires.

A l'étape 118, un test est réalisé sur les dernières valeurs stockées pour savoir si la vitesse instantanée du marcheur, calculée à partir de la dernière distance élémentaire et de la durée-séparant celle-ci de la précédente, est comprise ou non dans une plage de vitesses prédéterminées. Si la vitesse instantanée calculée n'est pas comprise dans cette plage, un son est émis à l'étape 120 par l'élément piézoélectrique 74. Si la vitesse instantanée calculée est inférieure à la limite inférieure de la plage de vitesses, un son grave est émis. Si cette valeur de vitesse est supérieure à la limite supérieure de la plage de vitesses, un son aigu est émis.

Quelle que soit la valeur de vitesse instantanée calculée le programme vérifie à l'étape 122 (Fig. 5C) si le bouton-poussoir 64 a été ou non actionné par le marcheur pour indiquer qu'il ressent des premières douleurs. Par ailleurs, le programme vérifie, à cette même étape, si cet appui sur le bouton-poussoir 64 est le premier.

Si les deux conditions sont vérifiées, l'instant d'actionnement du bouton-poussoir 64 est mémorisé à l'étape 124 et la diode électroluminescente 70 est allumée à l'étape 126.

A l'étape 128, le programme vérifie si une anomalie a été rencontrée dans le fonctionnement de l'appareil, par exemple la déconnexion de l'émetteur 18 ou du récepteur 20 ou encore une décharge excessive des piles d'alimentation. Si tel n'est pas le cas, le programme vérifie, à l'étape 130, si le bouton-poussoir 66 a été actionné par le marcheur pour indiquer l'arrêt de la marche. Si tel n'est pas le cas, un test est effectué à l'étape 132 pour détecter une impulsion de commande d'émission issue du générateur 32. Dès qu'une telle impulsion est détectée, le programme réinitialise à nouveau l'horloge 34 et procède au déclenchement de celle-ci à l'étape 102. Une nouvelle onde ultrasonore est alors émise par l'émetteur 18.

Lorsque l'actionnement du bouton-poussoir 66 indiquant l'arrêt de la marche est détecté à l'étape 130, le programme commande la mémorisation de l'instant d'arrêt à l'étape 133 et l'allumage de la diode 72 à l'étape 134.

Après l'allumage de la diode 72, ou si une anomalie a été détectée à l'étape 128, le programme procède à l'arrêt du générateur d'impulsions 32 à l'étape 136. Le calculateur 36 procède alors à l'étape 138 au calcul de la distance totale parcourue par le marcheur à partir des données stockées dans la table de distances élémentaires par sommation de chacune des distances élémentaires stockées et correspondant chacune à un pas. Cette sommation est effectuée pour les distances élémentaires s'échelonnant entre l'instant d'actionnement du bouton-poussoir 62 et l'instant d'actionnement du bouton-poussoir 66 ou l'instant de détection d'une anomalie (à l'étape 128).

De manière analogue, le calculateur 36 calcule à l'étape 138 la distance intermédiaire parcourue entre le début de la marche correspondant à l'actionnement du bouton-poussoir 62 et la première sensation de douleur indiquée par le patient par l'actionnement du bouton-poussoir 64. De même, la vitesse moyenne sur l'ensemble du parcours est calculée par le calculateur 36 en divisant la distance totale parcourue par le temps de parcours déduit du compteur d'impulsions.

Après ces différents calculs, les données contenues dans la table de distances élémentaires, les instants d'actionnement des boutons-poussoirs 62, 64, 66, la distance totale parcourue, la distance intermédiaire et la vitesse moyenne de la marche ainsi que les éventuelles anomalies ou sorties de plage des vitesses instantanées détectées sont stockés à l'étape 140 sur la carte de mémorisation amovible 47.

Les résultats de l'épreuve, à savoir la distance totale parcourue, la distance intermédiaire et la vitesse moyenne, sont affichés sur l'afficheur 52 à l'étape 142. Par ailleurs, des symboles apparaissent sur l'afficheur 52 pour indiquer si la vitesse instantanée du marcheur à un instant donné est sortie de la plage de valeurs prédéterminées.

Après cet affichage des résultats, le programme attend une nouvelle initialisation à l'étape 90 en vue de procéder à une nouvelle épreuve.

Afin d'analyser plus précisément les données correspondant à une épreuve, et après mise hors tension de l'appareil, il est possible d'extraire la carte de mémorisation et d'introduire celle-ci dans un lecteur relié à un ordinateur séparé de traitement des données, en vue d'effectuer des traitements plus précis des données stockées sur celle-ci.

On conçoit qu'avec un tel dispositif, il est possible de mesurer avec précision la distance parcourue par un marcheur, et de connaître la distance parcourue avant que celui-ci ne ressente une première sensation de douleur. Il est à noter que d'autres instants de mesure intermédiaire peuvent être définis, afin de connaître d'autres distances intermédiaires parcourues.

Par ailleurs, le dispositif décrit ici est adapté pour effectuer des mesures sur un patient souffrant d'une pathologie, mais un dispositif ayant des fonctionnalités analogues peut être utilisé également pour la préparation de sportifs de haut niveau, ou sur toute autre personne souhaitant connaître avec précision la distance parcourue et le temps de marche avant la production d'un événement donné dépendant ou indépendant de celui-ci.

## Revendications

1. Appareil portable de mesure de la distance parcourue par un marcheur, notamment un marcheur dont on veut éprouver l'endurance, comportant des moyens (18, 20, 32 à 48) de mesure de la distance parcourue par le marcheur, caractérisé en ce qu'il comporte des moyens (62, 64, 66) actionnables par le marcheur d'entrée d'une information relative au déroulement de la marche et des moyens (47) de stockage d'une part de la valeur de la distance intermédiaire parcourue correspondant à la distance parcourue par le marcheur entre le début de la marche et l'instant d'actionnement des moyens d'entrée, et d'autre part de la distance totale parcourue par le marcheur.

2. Appareil selon la revendication 1, caractérisé en ce que les moyens de mesure de la distance parcourue comportent des moyens de mesure (18, 20) de la distance élémentaire séparant les pieds du marcheur lors de chaque pas et des moyens de calcul (32 à 48) de la somme des valeurs mesurées des distances élémentaires correspondant chacune à un pas pour déterminer la distance totale parcourue.

3. Appareil selon la revendication 2, caractérisé en ce qu'il comporte des moyens (47) de stockage des distances élémentaires séparant les pieds du marcheur lors de chaque pas.

4. Appareil selon la revendication 2 ou 3, caractérisé en ce que les moyens de mesure comportent un émetteur (18) et un récepteur (20) disposés sur les faces en regard des membres inférieurs du marcheur reliés par des conducteurs (14, 16) à un boîtier électronique de traitement.

5. Appareil selon la revendication 4, caractérisé en ce que l'émetteur (18) et le récepteur (20) comportent des moyens (22) à boucles et crochets de fixation sur les faces en regard des chevilles du marcheur et le boîtier électronique (12) de traitement comporte des moyens d'accrochage à la ceinture du marcheur.

6. Appareil selon la revendication 4 ou 5, caractérisé en ce qu'il comporte des moyens (32) de cadencement des mesures, une horloge (34) de mesure de la durée de propagation de l'onde entre l'émetteur (18) et le récepteur (20) et des moyens de calcul (36) de la distance élémentaire séparant les deux pieds du marcheur en fonction de la durée de propagation de l'onde ultrasonore.

7. Appareil selon la revendication 6, caractérisé en ce qu'il comporte des moyens de mesure de la durée écoulée depuis le début de la marche.

8. Appareil selon l'une quelconque des revendications précédentes, caractérisé en ce que les moyens de stockage comportent un support (47) de stockage de données, adapté pour être lu dans un dispositif de lecture et de traitement séparé.

9. Appareil selon la revendication 8, caractérisé en ce que le support (47) de stockage de données est amovible.

10. Appareil selon l'une quelconque des revendications précédentes, caractérisé en ce que l'information relative au déroulement de la marche de celui-ci est l'apparition d'un événement particulier au cours de la marche.

11. Appareil selon la revendication 10, caractérisé en ce qu'il comporte des moyens de stockage (38, 47) de l'instant d'actionnement des moyens d'entrée (62, 64, 66).

12. Appareil selon l'une quelconque des revendications précédentes, caractérisé en ce qu'il comporte des moyens d'affichage (52) de la distance parcourue.
